# EUROPÄISCHE PATENTSCHRIFT

(11) **EP 3 206 811 B1**
(45) Veröffentlichungstag und Bekanntmachung des Hinweises auf die Patenterteilung: **22.04.2020**
(21) Anmeldenummer: 15747433.9
(22) Anmeldetag: 31.07.2015
(51) Int. Cl.: B21H 1/20, B21D 17/04, B21H 7/18, B62D 1/185, F16D 3/06, F16C 3/03, F16C 3/035

(54) **VERFAHREN ZUM HERSTELLEN EINER PROFILIERTEN HOHLWELLE FÜR EINE TELESKOPIERBARE LENKWELLE EINES KRAFTFAHRZEUGS**
METHOD FOR PRODUCING A PROFILED HOLLOW SHAFT FOR A TELESCOPIC STEERING SHAFT OF A MOTOR VEHICLE
PROCÉDÉ DE PRODUCTION D'UN ARBRE CREUX PROFILÉ POUR ARBRE DE DIRECTION TÉLESCOPIQUE D'UN VÉHICULE AUTOMOBILE

(30) Priorität: 17.10.2014 DE 102014115140
(43) Veröffentlichungstag der Anmeldung: 23.08.2017
(73) Patentinhaber: thyssenkrupp Presta AG, 9492 Eschen (LI); thyssenkrupp AG, 45143 Essen (DE)
(72) Erfinder: WALSER, Michael, 72164 Cholula (MX)
(74) Vertreter: thyssenkrupp Intellectual Property GmbH
(86) Internationale Anmeldenummer: PCT/EP2015/067613
(87) Internationale Veröffentlichungsnummer: WO 2016/058723

(56) Entgegenhaltungen:
- DE-A1- 2 017 709
- DE-A1- 3 223 004
- DE-A1-102008 049 825
- FR-A- 1 331 015
- GB-A- 1 142 837
- JP-A- S5 835 023
- JP-B1- S4 834 663

## Beschreibung

### Technisches Gebiet

Die vorliegende Erfindung betrifft ein Verfahren zum Herstellen einer profilierten Hohlwelle für eine teleskopierbare Lenkwelle eines Kraftfahrzeugs, umfassend das Bereitstellen einer zu bearbeitenden Hohlwelle sowie eines Profildorns und eines mindestens eine Rolle aufweisenden Rollierkopfes, wobei der Profildorn zur Erzeugung einer Nut in der Hohlwelle zunächst in die Hohlwelle eingeführt wird und im Anschluss die Hohlwelle relativ zu dem Rollierkopf bewegt wird.

### Stand der Technik

Teleskopierbare Lenkwellen in Kraftfahrzeugen ermöglichen zum einen eine Verstellbarkeit der Lenksäule, zum anderen sollen sie verhindern, dass sich die Lenkwelle im Fall eines Crashs weiter in das Innere der Fahrgastzelle verschiebt und zu Verletzungen der Insassen führt. Dies wird in der Regel durch die Bereitstellung zweier gegeneinander teleskopierbarer Wellen bzw. Hohlwellen erreicht, welche gemeinsam eine Lenkwelle bilden. Weiterhin kann durch die Teleskopierbarkeit eine Einstellung der Lenkradposition in Längsrichtung erreicht werden.

Die Hohlwellen werden mit Profilen versehen, welche miteinander korrespondieren und zum einen eine Verschiebung in Längsrichtung und zum anderen eine Übertragung eines Drehmoments ermöglichen. Dabei müssen die Profile leichtgängig und spielfrei gegeneinander verschiebbar sein, wobei es insbesondere gilt, ein Verdreh- oder Knickspiel zu vermeiden.

Aus der Anforderung einer exakten Drehmomentübertragung ergibt sich eine möglichst torsionssteife Auslegung der Hohlwellen. Entsprechend kommen herkömmlich Hohlwellen mit hohen Wandstärken zum Einsatz. Um die Profilierung, beispielsweise eine Längsverzahnung, in den Hohlwellen zu erzeugen, erfolgt in der Regel eine schrittweise Bearbeitung, wobei die Hohlwellen zunächst auf einen Profildorn geschoben werden. Formwerkzeuge, wie zum Beispiel Rollen, wirken dann auf die äußeren Umfangsflächen der Hohlwellen ein. Dadurch kann zum einen die Hohlwelle an das Profil des Profildorns angepasst werden, zum anderen kann auf der äußeren Umfangsoberfläche ein entsprechendes Profil erzeugt werden. Aufgrund der hohen Materialstärken der Hohlwellen und der damit verbundenen hohen Walzkräfte erfolgt die Profilierung der Hohlwellen in der Regel nur schrittweise, wobei es zum Fließen des Materials kommt. Dazu arbeiten sich die Formwerkzeuge in Längs- und Umfangsrichtung Schritt für Schritt über die Hohlwelle und erzeugen so die gewünschte Profilierung. Die Schrittweise Erzeugung der Profilierung der Hohlwellen führt zu hohen Zykluszeiten, welche die Herstellungskosten der profilierten Hohlwellen in die Höhe treiben.

Die CH 579427 A5 zeigt beispielsweise ein Verfahren zur Fertigung eines rohrartigen, gerade verlaufenden Innen- und Außenprofils. Nachteil dieser Lösung ist die kontinuierliche Werkstückdrehbewegung, welche lange Taktzeiten zur Folge hat.

Aus der FR 1 331 015 A ist ein Verfahren zum Herstellen einer profilierten Hohlwelle für eine teleskopierbare Lenkwelle mit den eingangs genannten Verfahrensschritten bekannt. Dabei wird jede Nut Stück für Stück unter schrittweiser Drehung des Werkstücks hergestellt, so dass der Rollierkopf bei der Fertigung abwechselnd in Längs- und Umfangsrichtung relativ zur Hohlwelle bewegt werden muss. Dadurch resultieren ebenfalls lange Taktzeiten.

### Darstellung der Erfindung

Ausgehend von dem bekannten Stand der Technik ist es eine Aufgabe der vorliegenden Erfindung, ein verbessertes Verfahren zur Herstellung einer profilierten Hohlwelle für eine teleskopierbare Lenkwelle eines Kraftfahrzeugs bereitzustellen.

Diese Aufgabe wird mittels eines Verfahrens mit den Merkmalen des Anspruchs 1 gelöst. Vorteilhafte Ausgestaltungen ergeben sich aus den Unteransprüchen.

Entsprechend wird ein Verfahren zum Herstellen einer profilierten Hohlwelle für eine teleskopierbare Lenkwelle eines Kraftfahrzeugs angegeben, welches das Bereitstellen einer zu bearbeitenden Hohlwelle sowie eines Profildorns und eines mindestens eine Rolle aufweisenden Rollierkopfes umfasst, wobei der Profildorn zur Erzeugung einer Nut in der Hohlwelle zunächst in die Hohlwelle eingeführt wird und im Anschluss die Hohlwelle relativ zu dem Rollierkopf bewegt wird. Erfindungsgemäß erfolgt zur Ausbildung einer Nut eine Bewegung der Hohlwelle relativ zu dem Rollierkopf ausschließlich in Richtung der Längsachse der Hohlwelle.

Da auf eine kontinuierliche Drehbewegung des Profildorns und der Hohlwelle relativ zu dem Rollierkopf verzichtet wird, bedarf es einer vergleichsweise geringen Bearbeitungszeit zur Ausbildung der Nut in der Hohlwelle. Insgesamt ergeben sich dadurch vergleichsweise geringe Taktzeiten zur Ausbildung der mindestens einen Nut in der Hohlwelle. Auch die Komplexität der Fertigung reduziert sich durch den Wegfall einer kontinuierlichen Drehbewegung der Hohlwelle relativ zum dem Rollierkopf während der Bearbeitung der Hohlwelle. Insbesondere ist keine aufwändige Koordinierung einer Rotationsbewegung und einer Axialbewegung der Hohlwelle relativ zu dem Rollierkopf mehr nötig.

Die Rolle des Rollierkopfes weist bevorzugt einen definierten und, zumindest für den Produktionszyklus unveränderbaren radialen Abstand zu der Hohlwelle auf. Mit anderen Worten erfolgt keine Zustellung der Rolle bezogen auf den radialen Abstand zur Hohlwelle oder der Wert der Zustellung ist für die Dauer des jeweiligen Produktionsprozesses konstant. Die Hohlwelle umfasst eine äußere Umfangsoberfläche mit einem Außendurchmesser, wobei der radiale Abstand der Rolle geringer ist als der Außendurchmesser der Hohlwellen. Somit erfolgt bei der relativen Verschiebung der Hohlwelle zum Rollierkopf in Richtung der Längsachse, dass die Rolle auf die äußere Umfangsoberfläche der Hohlwelle so einwirkt, dass der Werkstoff der Hohlwelle verdrängt wird und dadurch die zumindest eine Nut in der Hohlwelle ausgebildet wird.

Insgesamt ermöglicht das Verfahren eine vereinfachte Herstellung, insbesondere für Grobzahnformen an Hohlwellen. Da zur Ausbildung einer Nut in der Hohlwelle, die Hohlwelle lediglich in Richtung ihrer Längsachse relativ zu dem Rollierkopf bewegt werden muss, kann die Bearbeitung ohne weiteres im Kaltwalzverfahren erfolgen.

In einer bevorzugten Ausführungsform wird der Profildorn mit der Hohlwelle gemeinsam bewegt und die Bewegung des Profildorns und der Hohlwelle relativ zu dem Rollierkopf ausschließlich in Richtung der Längsachse der Hohlwelle erfolgt.

Durch das gemeinsame Bewegen des Profildorns und der Hohlwelle wird die vorhandene Reibung zwischen dem Profildorn und der Hohlwelle minimiert, da keine relative Verschiebung zwischen dem Profildorn und der Hohlwelle während des Einwirkens der Rolle des Rollierkopfes auf die Hohlwelle und der damit verbundenen Ausbildung der zumindest einen Nut stattfindet.

In einer weiter bevorzugten Ausführungsform erfolgt die Erzeugung der mindestens einen Nut mit einer Nutlänge auf der Hohlwelle durch eine entlang der Nutlänge durchgehenden Vorhubbewegung der Hohlwelle relativ zu dem Rollierkopf, wobei die Rolle des Rollierkopfes auf der Hohlwelle in Längsrichtung abrollt.

Unter der durchgehenden Vorhubbewegung wird eine relative Bewegung der Hohlwelle gegenüber des Rollierkopfes über die gesamte Nutlänge ohne eine Richtungsumkehr verstanden. Vorzugsweise erfolgt die Bewegung mit einer konstanten Geschwindigkeit oder mit einem definierten Geschwindigkeitsprofil.

Wird die Nut auf der Hohlwelle durch eine durchgehende Vorhubbewegung erzeugt, ist es ausreichend, dass die Hohlwelle einmalig in Längsrichtung relativ zu dem Rollierkopf und insbesondere der Rolle des Rollierkopfes bewegt wird. Die Rolle wirkt dabei mit einer Kraft auf die Hohlwelle, um auf dieser die Nut auszubilden. Entsprechend kann die nötige Bearbeitungszeit zur Erzeugung einer Nut auf der Hohlwelle reduziert werden. Da die Rolle des Rollierkopfes lediglich in Richtung der Längsachse auf der Hohlwelle abrollt, liegt eine einfache Relativbewegung zwischen der Hohlwelle und dem Rollierkopf vor, welche keiner aufwändigen Koordinierung bedarf.

Die Erzeugung mindestens einer Nut auf der Hohlwelle kann vorzugsweise durch eine Doppelhubbewegung der Hohlwelle relativ zu dem Rollierkopf erfolgen. Dies hat den Vorteil, dass keine zusätzlichen Bewegungen erforderlich sind, um die Hohlwelle samt dem Dorn vom Rollierkopf zu trennen beziehungsweise aus diesem heraus zu bewegen. Entsprechend wird die Hohlwelle gemeinsam mit dem Dorn durch eine Vorhubbewegung relativ zum Rollierkopf mit der Rolle des Rollierkopfes in Kontakt gebracht und eine Nut in Richtung der Längsache der Hohlwelle in der Hohlwelle erzeugt. Mit dem Erreichen der gewünschten Nutlänge endet die Vorhubbewegung. Anschließend erfolgt eine Rückhubbewegung, bei welcher sich die Hohlwelle gemeinsam mit dem Profildorn in entgegengesetzter Richtung der Vorhubbewegung relativ in Richtung der Längsachse der Hohlwelle bewegt. Während der Rückhubbewegung wird die während der Vorhubbewegung erzeugte Nut erneut durch die Rolle des Rollierkopfes gewalzt.

In einer weiter bevorzugten Ausgestaltung wird abschließend die Hohlwelle relativ zu dem Rollierkopf zurückgezogen. Dadurch kann der Kontakt zwischen der Rolle des Rollierkopfes und der Hohlwelle getrennt werden. Entsprechend kann ein Walzvorgang zum Erzeugen einer Nut in der Hohlwelle abgeschlossen werden. Dies ist vor allem dann von Vorteil, wenn die Nutlänge geringer ist als die Länge der Hohlwelle oder mit anderen Worten, wenn die Nut nur teilweise auf der Hohlwelle ausgebildet ist.

In einer weiter bevorzugten Weiterbildung erfolgt die Erzeugung aller in der Hohlwelle vorhandenen Nuten durch einen gemeinsamen Arbeitsschritt mit einer durchgehenden Vorhubbewegung.

Vorzugsweise ist für jede erzeugte Nut auf der Hohlwelle eine separate Rolle in dem Rollierkopf bereitgestellt, wobei die Rollen zur Erzeugung der Nuten gleichzeitig auf der Hohlwelle abrollen.

Auf diese Weise ist es möglich, mehrere Nuten in Richtung der Längsachse der Hohlwelle in der Hohlwelle auf einmal zu erzeugen.

Dadurch kann mittels einer axialen Relativbewegung des Profildorns und der Hohlwelle gegenüber den Rollen des Rollierkopfes der gesamte Umformvorgang zur Erzeugung der Nuten in der Hohlwelle ausgeführt werden. Dadurch ergibt sich eine deutliche Zeitersparnis, so dass gegenüber herkömmlichen Herstellungsverfahren deutlich kürzere Taktzeiten zur Profilierung der Hohlwelle beziehungsweise zur Ausbildung der Nuten in der Hohlwelle möglich sind.

Darüber hinaus kann eine gleichzeitige Ausbildung der in der Hohlwelle zu erzeugenden Nuten bei einer symmetrischen Anordnung der Nuten in der Hohlwelle zu einer im Wesentlichen symmetrischen Krafteinwirkung der Rollen des Rollierkopfes in radialer Richtung auf die Hohlwelle beziehungsweise den Profildorn führen. Dies ist besonders vorteilhaft für die Ausgestaltung des Rollierkopfes. So führt ein symmetrischer Kräfteverlauf dazu, dass geringere Anforderungen an die Stützwirkung der einzelnen Komponenten des Rollierkopfes bestehen. So reduziert der symmetrische Kräfteverlauf die in einer Lagerung des Rollierkopfes entstehenden Momente erheblich, was zu einer Reduktion der Konstruktions- und Fertigungskosten des Rollierkopfes führen kann.

Ferner wirkt sich eine symmetrische Krafteinwirkung auch positiv auf die Eigenschaften der profilierten Hohlwelle aus. So erfährt die Hohlwelle gleichmäßige Biegevorgänge während der Kaltumformung, so dass auf der Hohlwelle gleichmäßige Nuten entstehen. Das Ergebnis ist ein symmetrischer Rotationskörper mit einer homogenen Materialverteilung.

Die Bereitstellung einer separaten Rolle in dem Rollierkopf für jede zu erzeugende Nut in der Hohlwelle macht somit eine Rotationsbewegung des Profildorns und der Hohlwelle überflüssig. Dadurch kann zum einen die Bearbeitungszeit zur Erzeugung einer profilierten Hohlwelle und zum anderen die Komplexität des Verfahrens zum Herstellen der profilierten Hohlwelle reduziert werden.
Die vorliegende Erfindung wird auch durch ein Verfahren mit den Merkmalen des Anspruchs 6 gelöst. Vorteilhafte Ausgestaltungen ergeben sich aus dem Unteranspruch.

Entsprechend wird ein Verfahren zur Herstellung einer teleskopierbaren Lenkwelle für ein Kraftfahrzeug angegeben, wobei eine innere Hohlwelle mit ihrem Nutenprofil in eine äußere Hohlwelle mit einem Nutenprofil eingeführt wird, wobei mittels zumindest einer Rolle in einer durchgehenden Vorhubbewegung entlang der Längsachse der Lenkwelle das Nutenprofil der äußeren Hohlwelle auf das Nutenprofil der inneren Hohlwelle kalibriert wird.

Dadurch, dass Rollen auf das Nutenprofil der äußeren Hohlwelle einwirken, erfolgt das Anschmiegen des Nutenprofils der äußeren Hohlwelle an das Nutenprofil der innere Hohlwelle. Durch das Anschmiegen wird das vorhandene Spiel zwischen der inneren und äußeren Hohlwelle minimiert, sodass eine spielarme und leichtgängig teleskopierbare Lenkwelle bereitgestellt werden kann.

Darüber hinaus kann vorzugsweise in die innere Hohlwelle ein Profildorn eingeführt sein, wobei der Profildorn der inneren Abstützung dient und somit einer ungewollten Verformung der inneren und äußeren Hohlwelle entgegenwirkt. Weiterhin ist es denkbar und möglich, dass während die zumindest eine Rolle die Nuten der äußeren Hohlwelle kalibriert, die innere und äußere Hohlwelle gegeneinander in ihrer Längsrichtung teleskopiert werden. Dies kann vorzugsweise oszillierend erfolgen, sodass eine Hin- und Herbewegung vollführt wird. Versuche haben ergeben, dass diese oszillierende Bewegung eine weitere Spielminimierung zur Folge hat. Weiterhin hat sich gezeigt, dass ein zwischen der inneren Hohlwelle und äußeren Hohlwelle vorhandener Schmierstoff optimal verteilt wird.

In einer weiter bevorzugten Weiterbildung wird vor dem Einführen der inneren Hohlwelle in die äußere Hohlwelle auf die innere Hohlwelle eine Kunststoffhülse aufgebracht, die nach dem Einführen der Hohlwelle zwischen den Hohlwellen angeordnet ist, wobei die drei Bauteile zueinander kalibriert werden.

Die Kunststoffhülse ermöglicht bessere Gleiteigenschaften während dem Teleskopieren der Lenkwelle. Durch das Kalibrieren der drei Bauteile zueinander kann auf Grund der Spielreduktion im Nutenprofil der äußeren Hohlwelle eine besonders spielarme und torsionssteife Lenkwelle bereitgestellt werden.
Die vorliegende Erfindung wird auch durch eine Lenkwelle mit den Merkmalen des Anspruchs 8 gelöst. Vorteilhafte Ausgestaltungen ergeben sich aus den Unteransprüchen.

Entsprechend wird eine Lenkwelle für ein Kraftfahrzeug angegeben, welche eine innere Welle und eine äußere Welle umfasst, welche koaxial zueinander angeordnet und gegeneinander teleskopierbar sind, wobei die innere Welle und die äußere Welle ein Profil aus miteinander korrespondierenden Nuten aufweisen. Erfindungsgemäß ist zumindest eine der beiden Wellen der Lenkwelle nach dem oben genannten Verfahren hergestellt.

Entsprechend ist es möglich, eine Lenkwelle für ein Kraftfahrzeug herzustellen, welche sich durch geringere Taktzeiten und eine kostengünstigere Fertigung auszeichnet. Beispielsweise kann diese Lenkwelle als eine Lenkzwischenwelle, wobei diese Lenkzwischenwelle zumindest ein Universalgelenk umfasst, oder als Lenkspindel, wobei eine solche Lenkspindel drehbar in einer Lenksäule gelagert ist und einen Kopplungsabschnitt zur Anbindung eines Lenkrades umfasst, ausgebildet sein.

In einer bevorzugten Ausführungsform beträgt ein Flankenwinkel α der Nuten in der äußeren Welle und/oder der inneren Welle und der Flankenwinkel α eines Profilkopfes einer Innenverzahnung der äußeren Welle und/oder der inneren Welle 45° bis 75°, bevorzugt 55° bis 65° und besonders bevorzugt 60°.

Der Winkel α entspricht dem Winkel der beiden Zahnflanken eines Zahns einer Innenverzahnung der äußeren Welle. Den gleichen Winkel α weisen zwei sich gegenüberliegende Zahnflanken einer Außenverzahnung der inneren Welle auf. Die sich gegenüberliegenden Zahnflanken bilden dabei zugleich die Seitenwände einer in der inneren Welle erzeugten Nut. Dadurch ist es möglich, dass ein Zahn der Innenverzahnung der äußeren Welle mit einer Nut der Außenverzahnung der inneren Welle korrespondiert. Ein Flankenwinkel α von 45° bis 75° ermöglicht, dass die innere Welle und die äußere Welle formschlüssig zur Drehmomentübertragung in Eingriff gebracht werden können und gleichzeitig in Richtung der Längsachse der Lenkwelle verschiebbar sind. Der Flankenwinkel α von 45° bis 75° ermöglicht ferner, dass die innere Welle und die äußere Welle untereinander auf die Lenkwelle wirkende Torsionskräfte übertragen können und gleichzeitigt die Gefahr eines Verkeilens der inneren Welle mit der äußeren Welle auf Grund der Rückfederung der Flanken, was zu einer Beeinträchtigung der Verschiebbarkeit zueinander in Längsrichtung führen kann, gering gehalten ist. Untersuchungen haben ergeben, dass ein bevorzugter Flankenwinkel α von 55° bis 65° verbesserte Ergebnisse in Bezug auf Toleranzanfälligkeit der zueinander teleskopierbaren inneren und äußeren Welle und der Torsionssteifigkeit liefert. Als optimaler Flankenwinkel α wurde ein Winkel mit dem Wert von 60°ermittelt. Dieser optimale Flankenwinkel zeigte ein geringes Spiel zwischen der inneren und äußeren Welle und eine hohe Torsionssteifigkeit.

In einer weiteren Ausführungsform liegt das Verhältnis der Differenz eines Innendurchmessers eines Profilkopfes einer Außenverzahnung und eines Innendurchmessers eines Nutbodens einer Innenverzahnung der inneren Welle und/oder der äußeren Welle zu einer Materialstärke der inneren Welle und/oder der äußeren Welle zwischen 1 und 4.

Versuche haben ergeben, dass das Verhältnis bevorzugt zwischen 1,5 und 3,5 liegt und besonders bevorzugt zwischen 2 und 3, da so ideale Bedingungen für die Einbringung der Nuten nach dem oben genannten Verfahren vorliegen.

Damit die Lenkwelle ein erforderliches Mindestmaß an Torsionssteifigkeit bereitstellen kann, sollte eine minimale Wandstärke der inneren Welle und/oder der äußeren Welle, welche 25% der Differenz des Innendurchmessers eines Zahns der Außenverzahnung und des Innendurchmessers eines Zahns der Innenverzahnung der inneren Welle und/oder der äußeren Welle beträgt, nicht unterschritten werden.

In einer bevorzugten Weiterbildung weist die innere Welle und/oder die äußere Welle vor dem Einbringen der zumindest einen Nut ein zu mindestens teilweises, bezogen auf die Wellenlängsachse, kreiszylindrisches oder ein polygonales Hohlquerschnittsprofil auf.

Zur Erreichung einer sicheren Drehmomentenübertragung im Missbrauchsfall ist der Hohlquerschnitt bevorzugt ein Dreiflach oder Vierflach.

In einer bevorzugten Weiterbildung ist zwischen der inneren Welle und der äußeren Welle eine Hülse mit einem Profil angeordnet, welches mit dem Profil der inneren Welle und dem Profil der äußeren Welle korrespondiert.

Die Hülse trägt dazu bei, dass das Spiel zwischen den Kontaktflächen der inneren Welle und der äußeren Welle reduziert beziehungsweise verhindert werden kann. Darüber hinaus kann die Hülse eine leichtgängige Bewegung der inneren Welle relativ zur äußeren Welle ermöglichen. Entsprechend kann die Hülse ermöglichen, dass eine Justierung der Lenkwelle auf einem geringen und konstanten Kraftniveau erfolgt.

In einer weiter bevorzugten Ausgestaltung ist die Hülse aus Kunststoff gefertigt. Dadurch ist es möglich, auf einfachem und schnellem Wege das Innenprofil der Hülse und das Außenprofil der Hülse an das Profil der Innenwelle und der Außenwelle exakt anzupassen, um eine Längsverschiebung der Lenkwelle mit einem definierten Kraftniveau zu erreichen Ferner ermöglicht eine Hülse aus Kunststoff eine Reduktion der Geräuschbildung beim Einsatz der Lenkwelle.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: schematisch eine perspektivische Ansicht einer Lenkwelle;
- Figur 2: schematisch einen Teil einer äußeren Welle und einen Teil einer inneren Welle der vorstehenden Figur;
- Figur 3: schematisch eine Querschnittansicht der Lenkwelle der vorstehenden Figuren;
- Figur 4: schematisch eine Detailansicht der in Figur 3 gezeigten Querschnittansicht;
- Figur 5: schematisch eine Querschnittansicht einer äußeren Welle;
- Figur 6: schematisch eine Querschnittansicht einer inneren Welle;
- Figur 7: schematisch eine Querschnittansicht einer Hülse;
- Figur 8: schematisch eine perspektivische Ansicht eines Rollierkopfes;
- Figur 9: schematisch eine Draufsicht des Rollierkopfes der vorstehenden Figur;
- Figur 10: schematisch eine Detailansicht der in Figur 9 gezeigten Draufsicht des Rollierkopfes;
- Figur 11: schematisch eine Schnittansicht der Detailansicht des Rollierkopfes der vorstehenden Figur;
- Figur 12: schematisch eine Schnittansicht durch den Rollierkopf der vorstehenden Figuren, wobei der Schnitt entlang der Längsachse eines Profildorns verläuft;
- Figur 13: schematisch eine Schnittansicht des Rollierkopfes der vorstehenden Figuren, wobei sich eine Hohlwelle im Rollierkopf befindet;
- Figur 14: schematisch eine Schnittansicht des Rollierkopfes der vorstehenden Figuren, wobei sich eine Hohlwelle in dem Rollierkopf befindet; und
- Figur 15: schematisch eine Schnittansicht einer Hohlwelle, welche mit einer Rolle des Rollierkopfes in Kontakt steht.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente mit identischen Bezugszeichen bezeichnet. Um Redundanzen zu vermeiden, wird auf eine wiederholte Beschreibung dieser Elemente in der nachfolgenden Beschreibung teilweise verzichtet.

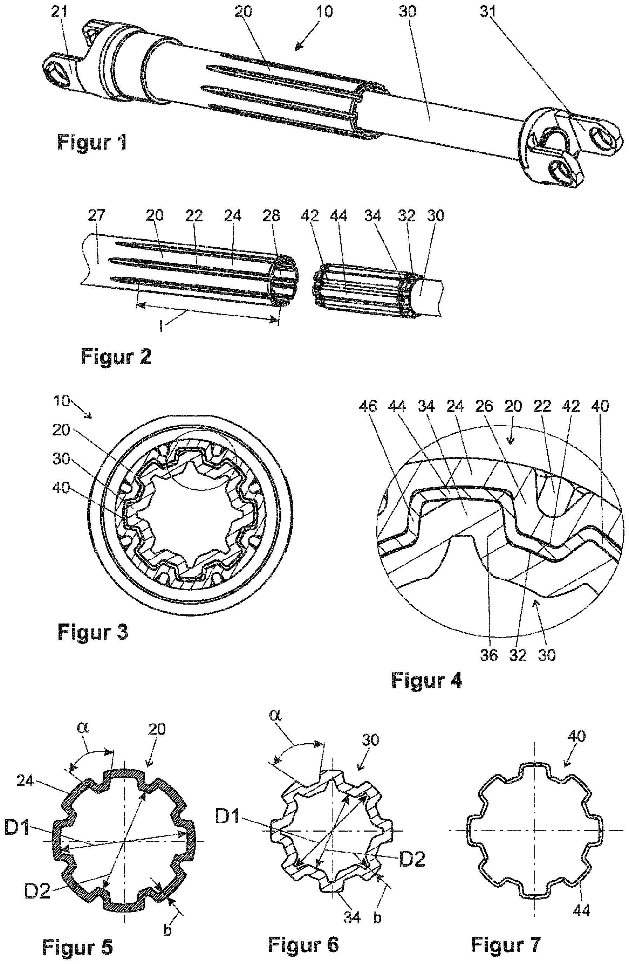

Figur 1 ist eine Lenkwelle 10 für ein Kraftfahrzeug zu entnehmen. Die Lenkwelle 10 weist eine äußere Welle 20 und eine innere Welle 30 auf, welche gegeneinander teleskopierbar sind. An einem äußeren Ende weist die äußere Welle 20 Gabel 21 auf, die ein Teil eines nicht gezeigten Universalgelenks darstellt, um die Lenkwelle 10 in einem Lenkstrang zu integrieren. Auch die innere Welle 30 weist an einem äußeren Ende eine Gabel 31 auf, die ein Teil eines nicht gezeigten Universalgelenks darstellt, um die Lenkwelle 10 in den Lenkstrang zu integrieren.

Die äußere Welle 20 und die innere Welle 30 sind Hohlwellen, welche aus einem Stahl mit guten Umformeigenschaften gefertigt sind. Alternativ können die äußere Welle 20 und die innere Welle 30 auch aus Aluminiumlegierungen, Edelstahl und dergleichen gefertigt sein.

Figuren 1 und 2 ist zu entnehmen, dass die äußere Welle 20 in dem Bereich, welcher zur Aufnahme der inneren Welle 30 dient, profiliert ist. Entsprechend weist die äußere Welle 20 in diesem Bereich Nuten 22 auf, welche in Axialrichtung der äußeren Welle 20 verlaufen. Die Nuten 22 mit einer Nutlänge I auf der äußeren Umfangsoberfläche 27 der äußeren Welle 20 bilden eine Innenverzahnung auf der inneren Umfangsoberfläche 28 der äußeren Welle 20. Figur 2 ist zu entnehmen, dass ein Endabschnitt der inneren Welle 30, welcher in einem Betriebszustand in die äußere Welle 20 gesteckt ist, eine Außenverzahnung aufweist, welche mit der Innenverzahnung der äußeren Welle 20 korrespondiert. Die Außenverzahnung der inneren Welle 30 ist durch Nuten 32 auf einer äußeren Umfangsoberfläche 37 der inneren Welle 30 gebildet. Auf der Außenverzahnung der inneren Welle 30 ist eine Hülse 40 angeordnet, welche sowohl mit der Außenverzahnung der inneren Welle 30 als auch mit der Innenverzahnung der äußeren Welle 20 korrespondiert. Die Hülse 40 ist dabei auf die innere Welle 30 pressgepasst, so dass sich die Hülse 40 gemeinsam mit der inneren Welle 30 relativ zu der äußeren Welle 20 in dieser bewegen kann. In einer nicht dargestellten Ausführungsform ist die Hülse 40 auf der inneren Welle 30 durch eine Verstemmung axial fixiert. Um den Steifigkeitsanforderungen der Lenkwelle 10 gerecht zu werden, besteht zwischen der inneren Welle 30 beziehungsweise der Hülse 40 und der äußeren Welle 20 ein sehr geringes Spiel, das quasi als Spielfrei bezeichnet werden kann. Vielmehr wird zwischen der inneren Welle 30 beziehungsweise der Hülse 40 und der äußeren Welle 20 ein Schiebesitz bereitgestellt, welcher eine Justierung der Länge der Lenkwelle 10 auf einem sehr geringen und konstanten Kraftniveau erlaubt.

Figuren 3 und 4 sind Querschnittansichten durch die Lenkwelle 10 zu entnehmen. Es ist zu erkennen, dass das Profil der äußeren Welle 20 mit dem Profil der Hülse 40 beziehungsweise der inneren Welle 30 korrespondiert. So trifft beispielsweise die Nut 22 der äußeren Welle 20 auf die Nut 42 der Hülse 40 beziehungsweise die Nut 32 der inneren Welle 30. Die jeweils an die Nuten 22, 42, 32 angrenzenden Flanken 26, 46, 36 erstrecken sich, wie in den Figuren 5 und 6 gezeigt, von dem Nutboden jeweils im gleichen Winkel. Daraus ergibt sich, wie in Figur 4 gezeigt, dass die Flanken 26, 36, 46 der äußeren Welle, der Hülse und der inneren Welle nahezu parallel zueinander verlaufen und der Kraftfluss zwischen der inneren Welle 30 und der äußeren Welle 20 lediglich über die Flanken 26, 36, 46 stattfindet. Im Bereich außerhalb der Flanken 26, 36, 46 besteht kein kraftübertragender Kontakt zwischen der inneren Welle 30, der Hülse 40 und der äußeren Welle 20.

Den Figuren 3 und 4 ist weiterhin zu entnehmen, dass an eine innere Umfangsoberfläche des Profilkopfs 24 der äußeren Welle 20 ein Profilkopf 44 der Hülse 40 angrenzt. An die innere Umfangsoberfläche des Profilkopfs 44 grenzt wiederum ein Profilkopf 34 der inneren Welle 30 an.

Aufgrund der miteinander korrespondierenden Profile der äußeren Welle 20, der Hülse 40 und der inneren Welle 30 steht die äußere Welle 20 mit der inneren Welle 30 indirekt über die Hülse 40 im Eingriff. Somit ist es möglich, dass zwischen der äußeren Welle 20 und der inneren Welle 30 eine Drehmomentenübertragung bereitgestellt werden kann.

Die Figuren 5, 6 und 7 zeigen gesondert die Profilquerschnitte der äußeren Welle 20, der inneren Welle 30 und der Hülse 40. Dabei ist Figur 5 und 6 ein Innendurchmesser der Profilköpfe D1, ein Innendurchmesser der Nuten D2 sowie ein Flankenwinkel α zu entnehmen. Um ein Mindestmaß an Torsionssteifigkeit bereitzustellen, sollte das Verhältnis von der Differenz des Innendurchmessers der Profilköpfe D1 und des Innendurchmessers der Nuten D2 zu einer Materialstärke b zwischen 1 und 4, bevorzugt zwischen 1,5 und 3,5 und besonders bevorzugt zwischen 2 und 3 sein.

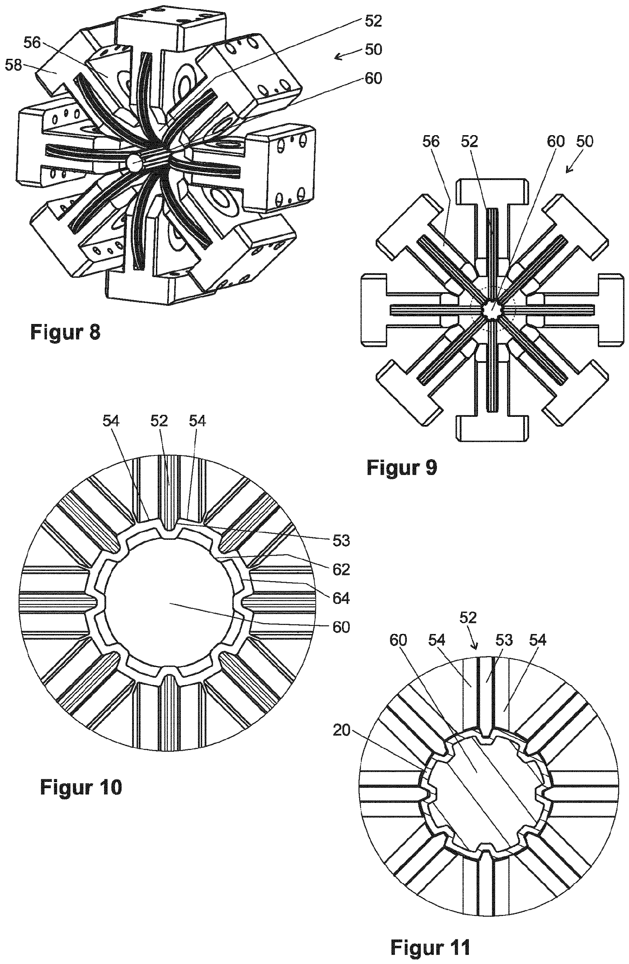

Figuren 8 und 9 zeigen einen Rollierkopf 50 zur Herstellung der oben beschriebenen äußeren Welle. Der Rollierkopf zur Herstellung der oben beschriebenen inneren Welle weist einen analogen Aufbau zu dem Rollierkopf 50 zur Herstellung der äußeren Welle auf. Der Rollierkopf 50 weist acht Rollen 52 auf, welche sternförmig um eine Rollierachse herum angeordnet sind. Die Rollen 52 sind zueinander jeweils unter einem Winkel von 45° angeordnet. Jede Rolle 52 ist durch zwei Lagerbacken 56 gelagert. Die beiden Lagerbacken 56 einer Rolle 52 sind über einen Rollenlagerfuß 58 miteinander verbunden.

Der Rollenlagerfuß 58 weist Bohrungen 59 zur Befestigung an einem Rahmen des Rollierkopfes 50 auf.

Den Figuren 8 und 9 ist ein Profildorn 60 zu entnehmen, welcher inmitten der acht Rollen 52 angeordnet ist. Zwischen dem Profildorn 60 und den Rollen 52 ist ein Spalt bereitgestellt, so dass der Profildorn 60 entlang der Rollierachse bewegt werden kann, ohne dass die Rollen 52 auf dem Profildorn 60 abrollen.

Alternativ kann der Rollierkopf auch ein, zwei, drei, vier, fünf, sechs, sieben, neun, zehn, elf, zwölf oder mehr Rolle 52 aufweisen, welche unter einem entsprechenden Winkel voneinander beabstandet, umlaufend angeordnet sind.

Figur 10 ist eine vergrößerte Ansicht des Profildorns 60 zu entnehmen, wobei zwischen dem Profildorn 60 und den Rollen 52 ein Spalt bereitgestellt ist, welcher dem Profil einer mittels des Rollierkopfes 50 herzustellenden Welle entspricht.

Den Figuren 10 und 11 ist zu entnehmen, dass die Rollen 52 profiliert sind und ein Rollenmittenprofil 53 sowie ein Rollenrandprofil 54 aufweisen. Dabei ist der Durchmesser des Rollenmittenprofils 53 größer als der Durchmesser des Rollenrandprofils 54. Die Rollen 52 und der Profildorn 60 sind derart zueinander angeordnet, dass ein Rollenmittenprofil 53 mit einer Nut 62 des Profildorns 60 korrespondiert. Ferner korrespondieren die Rollenrandprofile 54 mit den Profilköpfen 64 des Profildorns 60.

Figur 11 ist ein Querschnitt einer Detailansicht eines Rollierkopfes 50 zu entnehmen, wobei die Rollen 52 mit einer äußeren Welle 20 in Kontakt stehen, welche auf den Profildorn 60 aufgeschoben ist. Dabei wird die äußere Welle 20 kaltgewalzt, so dass die äußere Welle 20 auf ihrer inneren Umfangsoberfläche das Profil des Profildorns 60 annimmt und auf ihrer äußeren Umfangsoberfläche durch die Rollen 52 und insbesondere das Rollenprofil, umgeformt wird.

Da das Rollenmittelprofil 53 mit der Nut 52 des Profildorns korrespondiert, wird das Material der äußeren Welle 20 durch das Rollenmittelprofil 53 in die Nut 62 des Profildorns 60 hineingedrückt. Auf den Profilköpfen 24 der äußeren Welle 20 rollen beziehungsweise walzen die Rollenrandprofile 54 ab, was eine Intensivierung der Krafteinwirkung der Rollen 52 auf die äußere Welle 20 und eine verbesserte Ausbildung der Innenverzahnung der äußeren Welle 20 ermöglicht. Alternativ kann auch die innere Welle einer Lenkwelle mittels eines beschriebenen Rollierkopfes gefertigt werden.

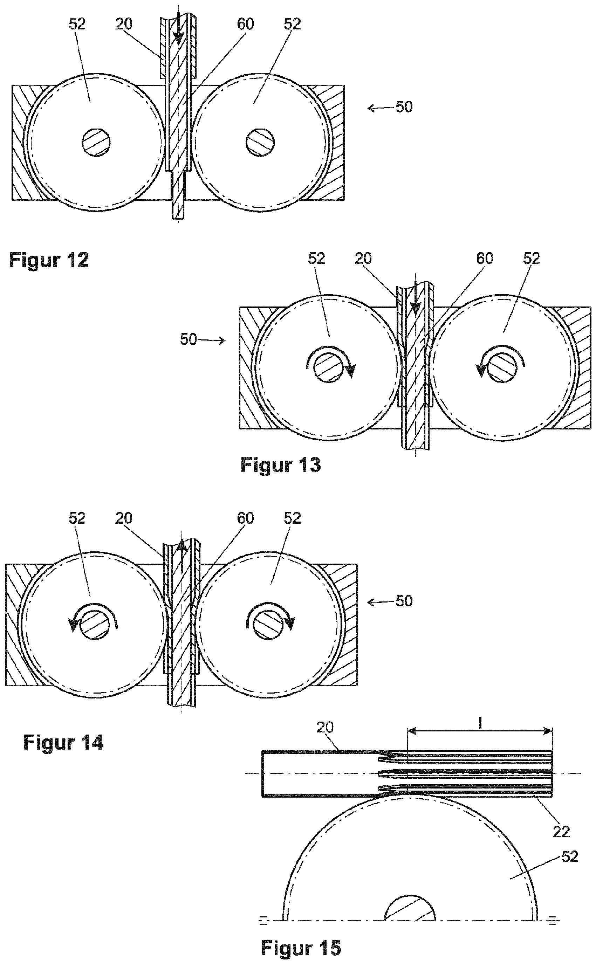

Figuren 12 bis 14 zeigen den Bewegungsablauf einer Doppelhubbewegung zur Profilierung der äußeren Welle 20. Dabei handelt es sich um Querschnittansichten, welche jeweils zwei gegenüberliegende Rollen 52 zeigen, wobei zwischen den Rollen 52 ein Profildorn 60 angeordnet ist, auf welchen eine äußere Welle 20 geschoben ist.

Figur 12 zeigt eine Vorhubbewegung des Profildorns 60. Der Profildorn 60 wird relativ zu den Rollen 52 bewegt. Zwischen dem Profildorn 60 und den Rollen 52 besteht kein Kontakt, so dass die Rollen 52 in einer Ruheposition verweilen. Die auf den Profildorn 60 aufgeschobene äußere Welle 20 steht in Figur 12 noch nicht mit den Rollen 52 in Kontakt.

In Figur 13 ist der Profildorn 60 mitsamt der äußeren Welle 20 nach wie vor in der Vorhubbewegung, mit dem Unterschied, dass nun die äußere Welle 20 mit den Rollen 52 in Kontakt steht. Der Spalt zwischen dem Profildorn 60 und den Rollen 52 ist nun von der äußeren Welle 20 ausgefüllt. Durch die Vorhubbewegung des Profildorns 60 gemeinsam mit der äußeren Welle 20 werden die Rollen 52 in Rotation versetzt. Sie walzen auf der äußeren Umfangsoberfläche der äußeren Welle 20 ab, wodurch die äußere Welle 20 die oben beschriebene Profilierung erfährt, da die Rollen 52 im Rollenmittelprofil 53 einen geringeren Abstand zum Profildorn 60 aufweisen als die noch nicht umgeformte äußere Welle 20.

Ist die gewünschte Länge der Profilierung und die damit verbundene Nutenlänge I der äußeren Welle 20 erreicht, setzt die in Figur 14 gezeigte Rückhubbewegung ein. Der Profildorn 60 und die äußere Welle 20 bewegen sich dabei gemeinsam in Bezug auf die Vorhubbewegung in entgegengesetzte Richtung. Zwischen der äußeren Welle 20 und den Rollen 52 besteht nach wie vor Kontakt, so dass während der Rückhubbewegung auch die Rollen 52 in entgegengesetzte Richtung rotieren. Die Rückhubbewegung kann solange aufrechterhalten werden, bis die äußere Welle 20 und der Profildorn 60 den Rollierkopf 50 verlassen haben. Alternativ kann sich an die Rückhubbewegung eine erneute Vorhubbewegung anschließen, um beispielsweise die Güte der Profilierung der äußeren Welle zu verbessern. Zur Verbesserung des Abrollens der Rollen auf der zu profilierenden Welle und zur Minimierung von Fressen in den Kontaktflächen ist es denkbar und möglich, die Rollen oder die Welle auf der entsprechenden Kontaktfläche mit einem Schmierstoff zu benetzen

Figur 15 zeigt eine Schnittansicht der äußeren Welle 20 und einer Rolle 52, wobei sich die äußere Welle 20 relativ zu der Rolle 52 an einem Umkehrpunkt der Vorhubbewegung zur Rückhubbewegung befindet. Die Nuten 22 weisen dabei die Nutenlänge I auf. Im Beispiel wird die Rolle 52 entlang der Nutlänge I durchgehend vom freien Ende der Welle 20 bis ans Ende der Nut 22 gerollt. Anschließend wird die Rolle 52 vom Umkehrpunkt am Ende der Nutlänge I durchgehend zurück gerollt. Auf diese Weise entsteht mit einem sehr einfachen Rollprozess die komplexe Rohrgeometrie.

### Bezugszeichenliste

- 10: Lenkwelle
- 20: Äußere Welle
- 21: Gabel
- 22: Nut
- 24: Profilkopf
- 26: Flanke
- 27: Äußere Umfangsoberfläche
- 28: Innere Umfangsoberfläche
- 30: Innere Welle
- 31: Gabel
- 32: Nut
- 34: Profilkopf
- 36: Flanke
- 37: Äußere Umfangsoberfläche
- 40: Hülse
- 42: Nut
- 44: Profilkopf
- 46: Flanke
- 50: Rollierkopf
- 52: Rolle
- 53: Rollenmittenprofil
- 54: Rollenrandprofil
- 56: Rollenlagerbacke
- 58: Rollenlagerfuß
- 60: Profildorn
- 62: Nut
- 64: Profilkopf
- 66: Flanke
- D1: Innendurchmesser eines Profilkopfes
- D2: Innendurchmesser eines Nutbodens
- b: Materialstärke
- α: Flankenwinkel
- l: Nutlänge

## Patentansprüche

1. Verfahren zum Herstellen einer profilierten Hohlwelle für eine teleskopierbare Lenkwelle (10) eines Kraftfahrzeugs, umfassend das Bereitstellen einer zu bearbeitenden Hohlwelle sowie eines Profildorns (60) und eines mindestens eine Rolle (52) aufweisenden Rollierkopfes (50), wobei der Profildorn (60) zur Erzeugung einer Nut (22, 32) in der Hohlwelle zunächst in die Hohlwelle eingeführt wird und im Anschluss die Hohlwelle relativ zu dem Rollierkopf (50) bewegt wird, **dadurch gekennzeichnet, dass**
zur Ausbildung einer Nut (22, 32) eine Bewegung der Hohlwelle relativ zu dem Rollierkopf (50) ausschließlich in Richtung der Längsachse der Hohlwelle erfolgt.

2. Verfahren gemäß Anspruch 1, **dadurch gekennzeichnet, dass** der Profildorn (60) mit der Hohlwelle gemeinsam bewegt wird und die Bewegung des Profildorns (60) und der Hohlwelle relativ zu dem Rollierkopf (50) ausschließlich in Richtung der Längsachse der Hohlwelle erfolgt.

3. Verfahren gemäß einem der vorhergehenden Ansprüche, **dadurch gekennzeichnet, dass** die Erzeugung der mindestens einen Nut (22, 32) mit einer Nutlänge (I) auf der Hohlwelle durch eine entlang der Nutlänge (I) durchgehenden Vorhubbewegung der Hohlwelle relativ zu dem Rollierkopf (50) erfolgt, wobei die Rolle (52) des Rollierkopfes (50) auf der Hohlwelle in Längsrichtung abrollt.

4. Verfahren gemäß einem der vorhergehenden Ansprüche, **dadurch gekennzeichnet, dass** abschließend die Hohlwelle relativ zu dem Rollierkopf (50) zurückgezogen wird.

5. Verfahren gemäß einem der vorhergehenden Ansprüche, **dadurch gekennzeichnet, dass** das Erzeugen aller in der Hohlwelle vorhandenen Nuten (22, 24, 32, 34) in einem gemeinsamen Arbeitsschritt mit einer durchgehenden Vorhubbewegung erfolgt..

6. Verfahren zur Herstellung einer teleskopierbaren Lenkwelle (10) für ein Kraftfahrzeug, **dadurch gekennzeichnet, dass** eine innere Hohlwelle mit ihrem Nutenprofil in eine äußere Hohlwelle mit einem Nutenprofil eingeführt wird, wobei mittels zumindest einer Rolle (50) in einer durchgehenden Vorhubbewegung entlang der Längsachse der Lenkwelle das Nutenprofil der äußeren Hohlwelle auf das Nutenprofil der inneren Hohlwelle kalibriert wird.

7. Verfahren nach Anspruch 6, **dadurch gekennzeichnet, dass** vor dem Einführen der inneren Hohlwelle in die äußere Hohlwelle auf die innere Hohlwelle eine Kunststoffhülse aufgebracht wird, die nach dem Einführen der Hohlwelle zwischen den Hohlwellen angeordnet ist, wobei die drei Bauteile zueinander kalibriert werden.

## Claims

1. Method for producing a profiled hollow shaft for a telescopic steering shaft (10) of a motor vehicle, involving the providing of a hollow shaft to be processed and a profile mandrel (60) and a roller head (50) comprising at least one roller (52), wherein the profile mandrel (60) is first introduced into the hollow shaft in order to produce a groove (22, 32) in the hollow shaft and then the hollow shaft is moved relative to the roller head (50),
**characterized in that**
a movement of the hollow shaft relative to the roller head (50) is carried out exclusively in the direction of the longitudinal axis of the hollow shaft in order to form a groove (22, 32).

2. Method according to Claim 1, **characterized in that** the profile mandrel (60) is moved together with the hollow shaft and the movement of the profile mandrel (60) and the hollow shaft relative to the roller head (50) is carried out exclusively in the direction of the longitudinal axis of the hollow shaft.

3. Method according to either of the preceding claims,
**characterized in that** the at least one groove (22, 32) with a groove length (1) on the hollow shaft is created by a continuous advancing movement of the hollow shaft relative to the roller head (50) along the groove length (1), wherein the roller (52) of the roller head (50) rolls along the hollow shaft in the longitudinal direction.

4. Method according to one of the preceding claims,
**characterized in that** the hollow shaft is then retracted relative to the roller head (50).

5. Method according to one of the preceding claims,
**characterized in that** all grooves (22, 24, 32, 34) present in the hollow shaft are created in a common work step with a continuous advancing movement.

6. Method for producing a telescopic steering shaft (10) for a motor vehicle, **characterized in that** an inner hollow shaft with its groove profile is introduced into an outer hollow shaft with a groove profile, wherein the groove profile of the outer hollow shaft is calibrated to the groove profile of the inner hollow shaft by means of at least one roller (50) in a continuous advancing movement along the longitudinal axis of the steering shaft.

7. Method according to Claim 6, **characterized in that** prior to introducing the inner hollow shaft into the outer hollow shaft a plastic sleeve is placed on the inner hollow shaft, which is arranged between the hollow shafts after the inserting of the hollow shaft, the three components being calibrated relative to each other.

## Revendications

1. Procédé de production d'un arbre creux profilé pour un arbre de direction télescopique (10) d'un véhicule automobile, comprenant la fourniture d'un arbre creux à usiner ainsi que d'un mandrin profilé (60) et d'une tête de roulage (50) présentant au moins un rouleau (52), le mandrin profilé (60), pour produire une rainure (22, 32) dans l'arbre creux, étant d'abord introduit dans l'arbre creux et ensuite l'arbre creux étant déplacé par rapport à la tête de roulage (50), **caractérisé en ce que**
pour réaliser une rainure (22, 32), un déplacement de l'arbre creux par rapport à la tête de roulage (50) s'effectue exclusivement dans la direction de l'axe longitudinal de l'arbre creux.

2. Procédé selon la revendication 1, **caractérisé en ce que** le mandrin profilé (60) est déplacé conjointement avec l'arbre creux et le déplacement du mandrin profilé (60) et de l'arbre creux par rapport à la tête de roulage (50) s'effectue exclusivement dans la direction de l'axe longitudinal de l'arbre creux.

3. Procédé selon l'une quelconque des revendications précédentes, **caractérisé en ce que** la production de l'au moins une rainure (22, 32) s'effectue avec une longueur de rainure (1) sur l'arbre creux par un mouvement de précourse continu de l'arbre creux par rapport à la tête de roulage (50) le long de la longueur de rainure (1), le rouleau (52) de la tête de roulage (50) roulant sur l'arbre creux dans la direction longitudinale.

4. Procédé selon l'une quelconque des revendications précédentes, **caractérisé en ce qu'**ensuite, l'arbre creux est retiré par rapport à la tête de roulage (50) .

5. Procédé selon l'une quelconque des revendications précédentes, **caractérisé en ce que** la production de toutes les rainures présentes dans l'arbre creux (22, 24, 32, 34) s'effectue dans une étape de travail commune avec un mouvement de précourse continu.

6. Procédé de fabrication d'un arbre de direction télescopique (10) pour un véhicule automobile, **caractérisé en ce qu'**un arbre creux intérieur est introduit avec son profil de rainure dans un arbre creux extérieur avec un profil de rainure, le profil de rainure de l'arbre creux extérieur étant calibré au profil de rainure de l'arbre creux intérieur au moyen d'au moins un rouleau (50) dans un déplacement de précourse continu le long de l'axe longitudinal de l'arbre de direction.

7. Procédé selon la revendication 6, **caractérisé en ce qu'**avant l'introduction de l'arbre creux intérieur dans l'arbre creux extérieur, une douille en plastique est appliquée sur l'arbre creux intérieur, laquelle est disposée entre les arbres creux après l'introduction de l'arbre creux, les trois composants étant calibrés les uns aux autres.
